# EUROPÄISCHE PATENTSCHRIFT

(11) **EP 0 948 789 B1**
(45) Veröffentlichungstag und Bekanntmachung des Hinweises auf die Patenterteilung: **12.07.2000**
(21) Anmeldenummer: 97954715.5
(22) Anmeldetag: 29.12.1997
(51) Int. Cl.: G11B 17/08

(54) **LAUFWERK FÜR PLATTENABSPIEL- UND/ODER -AUFZEICHNUNGSGERÄTE**
DRIVE FOR A DISC PLAYER AND/OR RECORDER
DISPOSITIF D'ENTRAINEMENT POUR TOURNE-DISQUES ET/OU APPAREILS D'ENREGISTREMENT

(30) Priorität: 03.01.1997 DE 19700085; 01.04.1997 DE 19713403
(43) Veröffentlichungstag der Anmeldung: 13.10.1999
(73) Patentinhaber: NSM AKTIENGESELLSCHAFT, 55411 Bingen (DE)
(72) Erfinder: HEIDERSBERGER, Börge, D-55411 Bingen (DE)
(74) Vertreter: Becker, Bernd, Dipl.-Ing.
(86) Internationale Anmeldenummer: DE9703029
(87) Internationale Veröffentlichungsnummer: WO9829866

(56) Entgegenhaltungen:
- EP-A- 0 128 629
- EP-A- 0 315 255
- EP-A- 0 397 262
- WO-A-92/13343
- US-A- 4 641 297
- PATENT ABSTRACTS OF JAPAN vol. 097, no. 001, 31. Januar 1997 & JP 08 249774 A (SONY CORP), 27. September 1996 & US 5 737 305 A (SONY) 7. April 1998

## Beschreibung

Die Erfindung bezieht sich auf ein Laufwerk für Plattenabspiel- und/oder -aufzeichnungs-geräte, aufweisend ein Gehäuse mit einer starr befestigten Abspieleinheit mit einem Plattenteller und mit einem einen Plattenhalter mit einer Platte aufnehmenden, relativ zur Abspieleinheit absenkbaren und anhebbaren Einschubfach, in dem ein Plattenandrücker drehbeweglich gelagert ist, wobei ein in der Abspieleinheit gelagerter Magnet beim Absenken des Einschubfaches mit dem Plattenandrücker in Eingriff bringbar ist.

Plattenabspielgeräte weisen mindestens ein Speichermagazin auf, das eine Vielzahl übereinanderliegend in Aufnahmefächern gelagerter, jeweils eine Platte aufnehmender Plattenhalter umfaßt. Eine in Stapelrichtung des Plattenmagazins verfahrbare Transporteinrichtung ist zur Hin- und Herbeförderung einer gewünschten Platte mit dem zugehörigen Plattenhalter zwischen dem Aufnahmefach und einer Abspieleinheit vorgesehen. Die Transporteinrichtung weist eine auf dieser horizontal verfahrbare Auszugeinrichtung für die Plattenhalter, einen Plattenandrücker für die Verspannung der abzuspielenden Platte mit dem Plattenteller der Abspieleinheit und einen Tragarm für die Aufnahme eines Plattenhalters auf.

Bei solchen Plattenabspielgeräten befördert die Transporteinrichtung den mit einer Platte versehenen Plattenhalter in das mit der Abspieleinheit versehene Laufwerk, das sich in der Ladestellung befindet. Mittels einer Steuermechanik wird das den Plattenhalter enthaltende Einschubfach mit dem Plattenandrücker abgesenkt. Die Abspieleinheit ist hierbei starr im Laufwerk angeordnet. Beim Absenken des Einschubfaches mit dem Plattenhalter wird die Platte auf den Plattenteller der Abspieleinheit abgelegt. Gleichzeitig wird der Plattenhalter um etwa 1 mm tiefer abgesenkt. Dadurch ist die Platte berührungsfrei zum Plattenhalter und liegt somit nur auf dem Plattenteller auf. In diesem Zustand erfolgt das Abspielen der Platte. Im Plattenteller der Abspieleinheit ist immer ein Magnet vorgesehen, der eine im Plattenandrücker angeordnete Eisenplatte anzieht, so daß die Platte zwischen dem Plattenandrücker und dem Plattenteller verspannt wird. Im Ladezustand des Laufwerkes muß der Plattenandrücker wieder angehoben werden, um einen Plattenhalter mit Platte einschieben oder herausziehen zu können. Um Beschädigungen der Platte zu vermeiden, muß diese zusammen mit dem Plattenhalter berührungsfrei eingeschoben werden und darf weder mit dem Plattenandrücker noch mit dem Plattenteller der Abspieleinheit in Berührung kommen.

Nachteilig hierbei ist, daß die Magnetkraft der Eisenplatte in einem Führungsdeckel des Plattenandrückers mit dem Magneten im Plattenteller derart abgestimmt sein muß, daß beim Absenken des Einschubfaches die Kraft des Magneten im Plattenteller ausreicht, um die Eisenplatte des Plattenandrückers vom Magneten des Führungsdeckels abzulösen und somit die Platte zu verspannen. Der gleiche Nachteil tritt beim umgekehrten Ablauf von der Abspielstellung zurück in die Ladestellung des Einschubfaches auf. Die Magnetkräfte müssen somit in Abhängigkeit vom Hubweg des Einschubfaches wechselseitig exakt aufeinander abgestimmt sein. Diese Abstimmung ist äußerst schwierig, so daß die Platte oftmals nicht hinreichend gespannt wird. Ist der Magnet im Führungsdeckel zu stark, wird der Plattenandrücker nicht gegen den Plattenteller gezogen. Ist dagegen die Magnetkraft des Plattenandrückers zu schwach, stößt der Plattenhalter beim Ladevorgang an diesen an. In Ladestellung kann sich auch die Restmagnetkraft vom Plattenteller auf den Plattenandrücker auswirken, so daß dieser einen zu geringen Hubweg zurücklegt.

Es ist Aufgabe der Erfindung, ein Laufwerk, insbesondere für Plattenabspielgeräte der eingangs genannten Art zu schaffen, bei der das Anheben des Plattenandrückers durch Magnetkrafteinwirkung entfällt und dennoch der Plattenhalter mit der aufgenommenen Platte berührungsfrei zum Plattenandrücker in das Laufwerk eingeschoben werden kann.

Erfindungsgemäß wird die Aufgabe dadurch gelöst, daß das Einschubfach druckfederbelastete Führungsleisten aufweist, die beim Absenken des Einschubfaches gegen den darin aufgenommenen Plattenhalter zusammendrückbar sind und die Platte von diesem freigeben. Dabei ist der Magnet im Plattenteller der Abspieleinheit angeordnet. Durch diese Maßnahme ist es nicht mehr erforderlich, einen zusätzlichen Magneten im Führungsdeckel vorzusehen.

Die druckfederbelasteten Führungsleisten im Einschubfach legen sich auf die Oberseite des eingeschobenen Plattenhalters an, während das Einschubfach gegen die Abspieleinheit abgesenkt wird. Dabei hebt sich die Platte vom Plattenhalter ab und kommt auf dem Plattenteller der Abspieleinheit zu liegen, der in das Innere des Einschubfaches durch dessen Abwärtsbewegung eindringt. Gleichzeitig wird vom Magneten der Abspieleinheit der Plattenandrücker angezogen, wodurch die Platte verspannt wird. Hiernach erfolgt ein weiteres geringfügiges Absenken des Einschubfaches, so daß der Plattenandrücker in seiner Aufnahme frei drehbeweglich ist und die Platte abgespielt werden kann. Die druckfederbelasteten Führungsleisten werden durch den im Einschubfach befindlichen Plattenhalter hierbei durch den geringfügigen Überhub des Einschubfaches vollständig zusammengedrückt, wodurch die freie Drehbarkeit der zwischen dem Plattenteller der Abspieleinheit und dem Plattenandrücker verspannten Platte gewährleistet wird.

Nach Beendigung des Abspielvorganges wird das Einschubfach wieder nach oben bewegt, wobei der Plattenandrücker außer Eingriff mit der Platte und dem Plattenteller gelangt und sich die druckfederbelasteten Führungsleisten entspannen und den Plattenhalter freigeben, auf den sich die nun wieder freigegebene Platte absenkt.

Das Vorsehen nur noch eines Magneten im Plattenteller der Abspieleinheit befreit von der Notwendigkeit, zwei Magnete unterschiedlicher Magnetkräfte, wie aus dem Stand der Technik bekannt, aufeinander abstimmen zu müssen. Somit erfolgt immer ein exaktes Spannen der Platte zwischen dem Plattenandrücker am Einschubfach und dem Plattenteller der Abspieleinheit. Darüber hinaus ist ein ungehindertes Einschieben des Plattenhalters in das Einschubfach gewährleistet. Während des Ladevorganges des Plattenhalters und des Abspielvorganges der Platte ist der Plattenandrücker immer lose und drehbeweglich im Einschubfach gelagert. Der Plattenandrücker wird nur kurzzeitig während des ersten Absenkens des Einschubfaches gegen dieses gepreßt, jedoch beim weiteren Absenken durch den Überhub, den das Einschubfach zurücklegt, wieder freigegeben.

Nach einer Weiterbildung der Erfindung besteht das Einschubfach im wesentlichen aus einem Führungsdeckel und einem mit diesem starr verbundenen Bodenblech. In den durch den Führungsdeckel und dem Bodenblech gebildeten Spalt wird der mit Platte versehene Plattenhalter eingeschoben oder herausgezogen. Um den ungehinderten Zugriff des Plattentellers auf die im Plattenhalter befindliche Platte zu ermöglichen, ist das Bodenblech mit einer Öffnung für den Durchtritt des Plattentellers der Abspieleinheit versehen.

Die magnetische Verbindung zwischen dem Plattenteller der Abspieleinheit und dem Plattenandrücker und dessen freie Bewegbarkeit wird durch das Vorsehen einer Eisenplatte in diesem ermöglicht. Der Plattenandrücker ist hierbei in einer an der Unterseite des Führungsdeckels befestigten Aufnahme mit vertikalem Spiel drehbeweglich gelagert.

In zweckmäßiger Ausbildung der Erfindung sind die druckfederbelasteten Führungsleisten parallel zueinander an den Seitenkanten des Führungsdeckels befestigt, so daß sich diese auf den seitlichen Randbereichen des Plattenhalters anlegen können.

Üblicherweise besitzt ein Plattenhalter an seinen Eckbereichen Ausnehmungen, die von der Transporteinrichtung des Plattenabspielgerätes erfaßt werden, um den Plattenhalter aus einem und in ein Plattenmagazin zu befördern. Diese Ausnehmungen am Plattenhalter können auch zur Begrenzung des Einschubweges des Plattenhalters in das Einschubfach genutzt werden. Dazu weisen die Führungsleisten an ihren in Einschubrichtung des Plattenhalters hinteren Ende jeweils einen Anschlag auf, der in die entsprechende Ausnehmung des Plattenhalters eingreift. Da die Führungsleisten federbelastet ausgebildet sind, geraten die Anschläge beim Herausziehen des Plattenhalters aus dem Einschubfach wieder außer Eingriff mit den Ausnehmungen des Plattenhalters.

Die Plattenhalter bestehen in der Regel wegen der leichten Herstellbarkeit und der geringen Masse aus einem weichen Kunststoff. Da die Plattenhalterdicke sehr gering, im Verhältnis dazu die Abmessungen jedoch relativ breit sind, neigt der Plattenhalter dazu, sich über seine Länge bzw. Breite zu verwinden. Diesem Verwindungsbestreben wird dadurch entgegengewirkt, daß an der Unterseite des Führungsdeckels mehrere zueinander beabstandete Niederhalter für den im Einschubfach aufgenommenen Plattenhalter angeordnet sind. Hierbei weisen die Niederhalter eine Höhe auf, die der Höhe der zusammengedrückten Führungsleisten entspricht. Diese Maßnahme wird noch dadurch unterstützt, daß ein die Abspieleinheit aufnehmendes Tragblech mehrere zueinander beabstandete, mit korrespondierenden Öffnungen im Plattenhalter in Eingriff bringbare Arretierbolzen aufweist. Die Arretierbolzen bewirken eine örtliche Lagesicherung des Plattenhalters im Einschubfach. Da die Arretierbolzen meistens einen Auflagebund aufweisen, wird eine umfassende Verwindungssteifigkeit und Lagesicherung des Plattenhalters im eingeschobenen Zustand gewährleistet.

Zur Steuerung der Abwärts- und Aufwärtsbewegung des Einschubfaches ist im Gehäuse eine Steuereinheit zum Betätigen des Einschubfaches angeordnet. Bevorzugt besteht die Steuereinheit aus einem Antriebsmotor und einem Übersetzungsgetriebe, das mit einer Schaltkulisse zur Bewegungssteuerung des Einschubfaches zusammenwirkt.

Es versteht sich, daß die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zugrunde liegende Gedanke wird in der nachfolgenden Beschreibung anhand eines Ausführungsbeispieles, das in der Zeichnung dargestellt ist, näher beschrieben. Es zeigt:
- Fig. 1: eine Vorderansicht im Teilschnitt des erfindungsgemäßen Laufwerkes in Ladestellung,
- Fig. 2: eine geschnittene Seitenansicht des Laufwerkes nach Fig. 1,
- Fig. 3: eine Vorderansicht im Teilschnitt des Laufwerkes in Abspielstellung,
- Fig. 4: eine geschnittene Seitenansicht des Laufwerkes nach Fig. 3 und

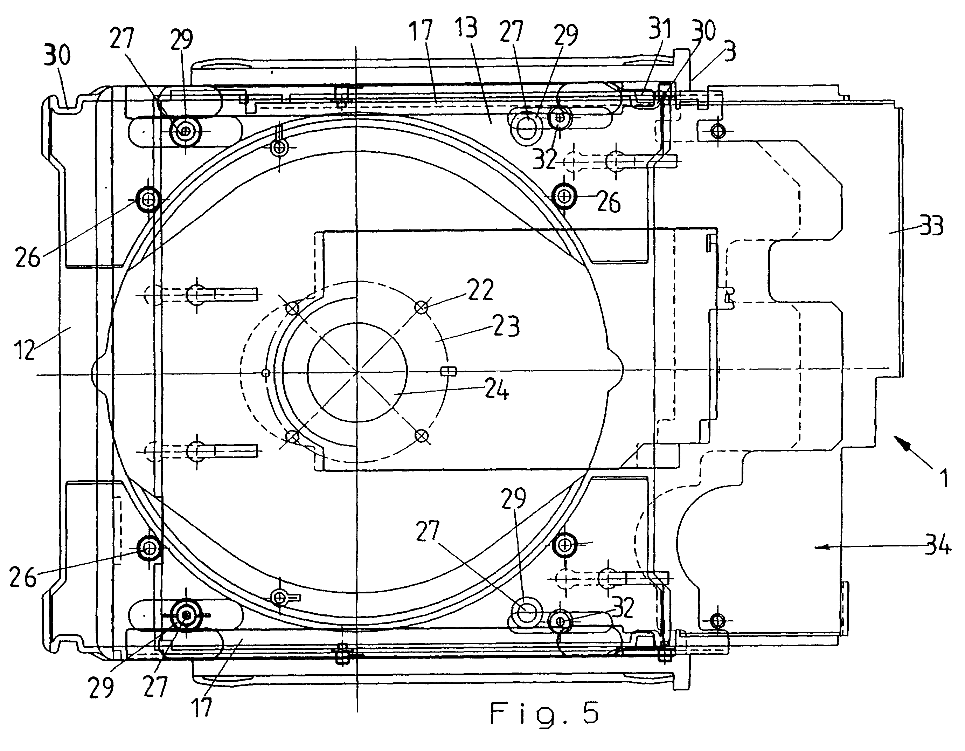

- Fig. 5: eine Draufsicht auf das Laufwerk.

Das Laufwerk 1 ist zur Verwendung in einem Plattenabspielgerät vorgesehen. Es besteht aus einem Gehäuse 3, vorzugsweise aus dünnen Stahlblech. Im Gehäuse 3 befindet sich eine auf einem Tragblech 4 angeordnete gehäusefeste Abspieleinheit 5 für Platten 6, insbesondere CD-Platten. Die Abspieleinheit 5 umfaßt einen Motor 7 und eine als Magnet 8 ausgebildete Antriebswelle 9, die einen Plattenteller 10 trägt. Des weiteren ist im Gehäuse 3 des Laufwerkes 1 ein relativ zur Abspieleinheit 5 anhebbares und absenkbares Einschubfach 11 zur Aufnahme eines die Platte 6 aufnehmenden Plattenhalters 12 vorgesehen.

Das Einschubfach 11 besteht im wesentlichen aus einem oberen Führungsdeckel 13 und einem mit diesem verbundenen unteren Bodenblech 14, so daß zwischen diesen ein Spalt zur Aufnahme des Plattenhalters 12 gebildet wird. Das Bodenblech 14 ist an seiner vorderen Kante mit einer Abschrägung 15 versehen, um das Einschieben des Plattenhalters 12 zu erleichtern. Der Plattenteller 10 dringt durch eine in das Bodenblech 14 eingebrachte Öffnung in das Einschubfach 11.

An der Unterseite des Führungsdeckels 13 sind an dessen Seitenbereichen in Einschubrichtung des Plattenhalters 12 jeweils eine mit Druckfedern 16 belastete Führungsleiste 17 angebracht. Die Druckfedern 16 stützen sich einerseits an der Führungsleiste 17 und andererseits an der Unterseite des Führungsdeckels 13 ab. In der Nähe jeder Druckfeder 16 ist jeweils ein Führungsbolzen 18 am Führungsdeckel 13 befestigt, der zur Hubbegrenzung der druckfederbelasteten Führungsleiste 17 dient. Zu diesem Zweck ist der Führungsbolzen 17 mit einem Bund 19 versehen, der an einer Schulter 20 einer Bohrung 21 an der Führungsleiste 17 anlegbar ist.

An der Unterseite des Führungsdeckels 13 ist mittels Nieten 22 eine Aufnahme 23 befestigt, in der ein Plattenandrücker 24 mit vertikalem Spiel und drehbeweglich gelagert ist. Der Plattenandrücker 24 weist eine Eisenplatte 25 auf. Des weiteren sind an der Unterseite des Führungsdeckels 13 mehrere zueinander beabstandete Niederhalter 26 für den Plattenhalter 12 vorgesehen.

Auf dem die Abspieleinheit 5 tragenden Tragblech 4 sind zwei gegenüberliegende Arretierbolzen 27 und zwei gleichmäßig dazu beabstandete, gegenüberliegende Auflagebolzen 35 befestigt. Jeder mit einer Auflageschulter 28 versehene Arretierbolzen 27 durchdringt in Abspielstellung des Laufwerkes 1 eine dafür vorgesehene Öffnung 29 des Plattenhalters 12. Dabei kommt die Unterseite des Plattenhalters 12 auf den Auflageschultern 28 der Arretierbolzens 27 zu liegen und gleichzeitig stützt sich die Unterseite des Plattenhalters 12 auf den Auflagebolzen 35 ab. Darüber hinaus ist in den Eckbereichen des Plattenhalters 12 jeweils eine Ausnehmung 30 ausgebildet. Diese gelangt beim Einschieben des Plattenhalters 12 in das Einschubfach 11 in Einschubrichtung des Plattenhalters 12 mit einem am Ende der Führungsleiste 17 ausgebildeten Anschlag 31 in Anlage.

Das Bodenblech 14 des Einschubfaches 11 ist über Verbindungselemente 32 mit einer Trageplatte 33 verbunden. Auf der Trageplatte 33 ist eine Steuereinheit 34 zur Steuerung der Absenk- und Hebebewegung des Einschubfaches 11 angeordnet.

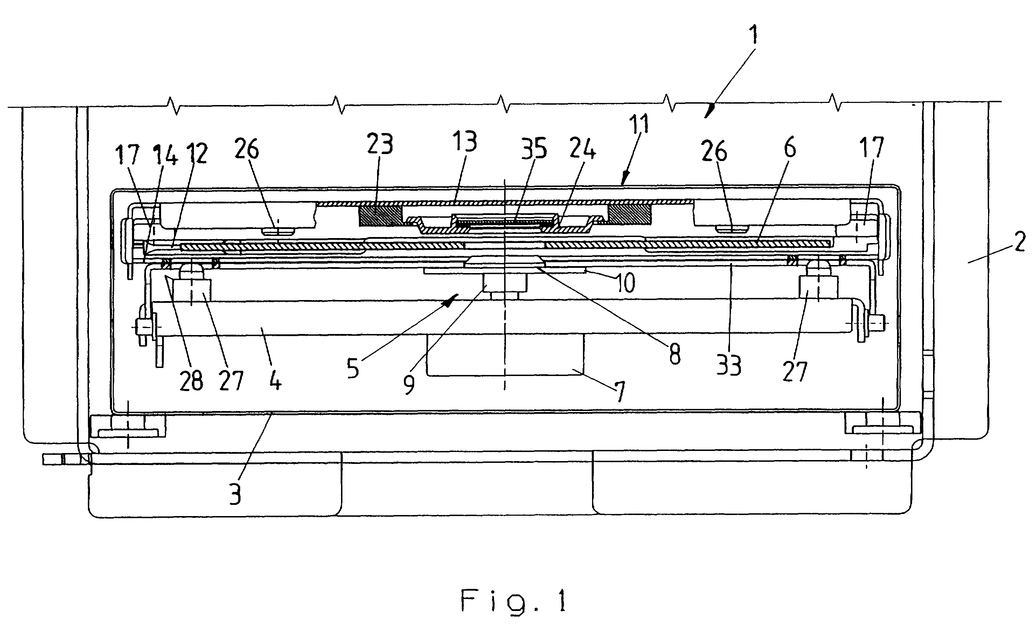

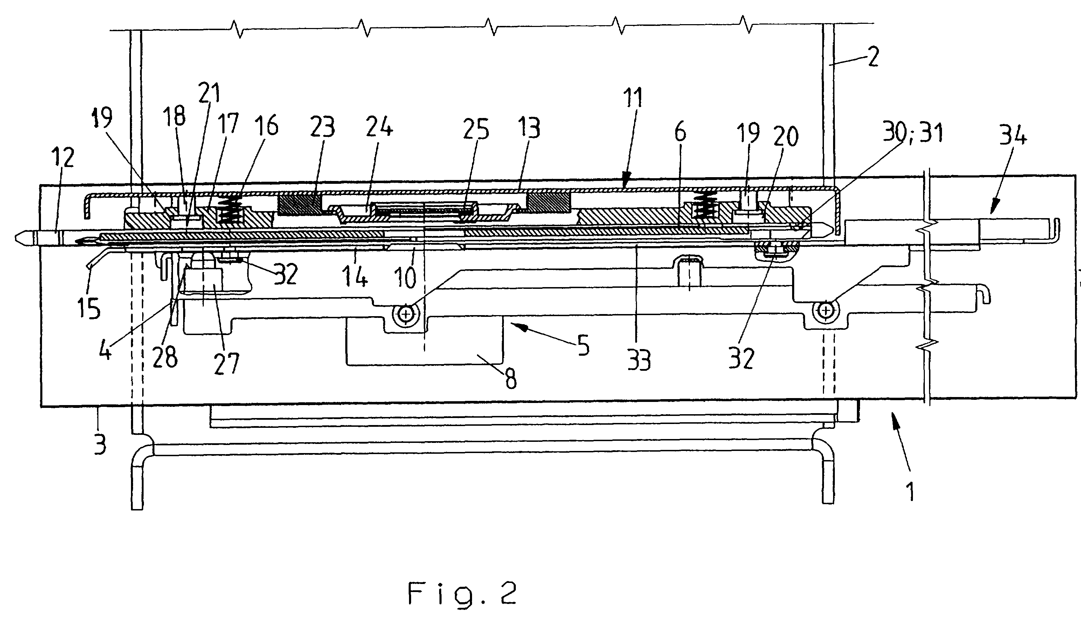

In Ladestellung des Laufwerkes 1 gemäß den Fig. 1 und 2 wird durch eine nicht dargestellte Transporteinrichtung ein eine Platte 6 aufnehmender Plattenhalter 12 in das Einschubfach 12 eingeschoben, so daß dieser zwischen dem Führungsdeckel 13 und dem Bodenblech 14 zu liegen kommt. Der Plattenhalter 12 gleitet dabei unter die druckfederbelasteten Führungsleisten 17 bis im eingeschobenen Zustand die Anschläge 31 der Führungsleisten 17 in die entsprechenden Ausnehmungen 30 des Plattenhalters 12 eingreifen. In diesem Zustand sind die Druckfedern 16 der Führungsleisten 17 entspannt. Das Einschubfach 11 befindet sich in der oberen Ausgangsstellung, so daß dieses gegenüber der Abspieleinheit beabstandet ist und sich der Plattenteller 10 zentrisch unter dem Plattenhalter 12 und der Platte 6 befindet. Die auf dem Tragblech 4 angeordneten Arretierbolzen 27 befinden sich außer Eingriff mit den entsprechenden Öffnungen 29 des Plattenhalters 12. Der Plattenandrücker 24 liegt durch seine Schwerkraft lose in seiner Aufnahme 23.

Um in die Abspielstellung des Laufwerkes 1 überzugehen, wird die auf der Trageplatte 33 angeordnete Steuereinheit 34 aktiviert. Durch eine nicht dargestellte Motor-Getriebe-Einheit in Verbindung mit einer Schieberkulisse wird das Einschubfach 11 um etwa 4 bis 5 mm abwärts in Richtung der Abspieleinheit 5 bewegt. Die auf dem Plattenhalter 12 aufliegenden Führungsleisten 17 werden zunächst etwas gegen den Federwiderstand der Druckfedern 16 zusammengedrückt. Dabei greifen die auf dem Tragblech 4 angeordneten Arretierbolzen 27 in die entsprechenden Öffnungen 29 des Plattenhalters 12 ein, so daß der Plattenhalter 12 auf den Auflageschultern 28 der Auflagebolzen 35 aufliegt. Die Platte 6 kommt nun auf dem Profilrahmen 10 der Abspieleinheit 5 zu liegen. Gleichzeitig wird durch die magnetische Antriebswelle 9 des Motors 7 die Eisenplatte 25 des Plattenandrükkers 24 angezogen, wobei dieser in seiner Aufnahme 23 festgelegt ist. Durch weiteres Absenken des Einschubfaches 11 um etwa 1 mm durch die Steuereinheit 34 werden die Druckfedern 16 der Führungsleisten 17 vollständig zusammengepreßt. Dabei wird die Platte 6 geringfügig vom Plattenhalter 12 und der Plattenandrücker 24 in seiner Aufnahme 23 angehoben. Dadurch wird der Plattenandrücker 24 in der Aufnahme 23 drehbeweglich. Die am Führungsdeckel 13 angebrachten Niederhalter 26 legen sich nun an die Oberfläche des Plattenhalters 12 an.

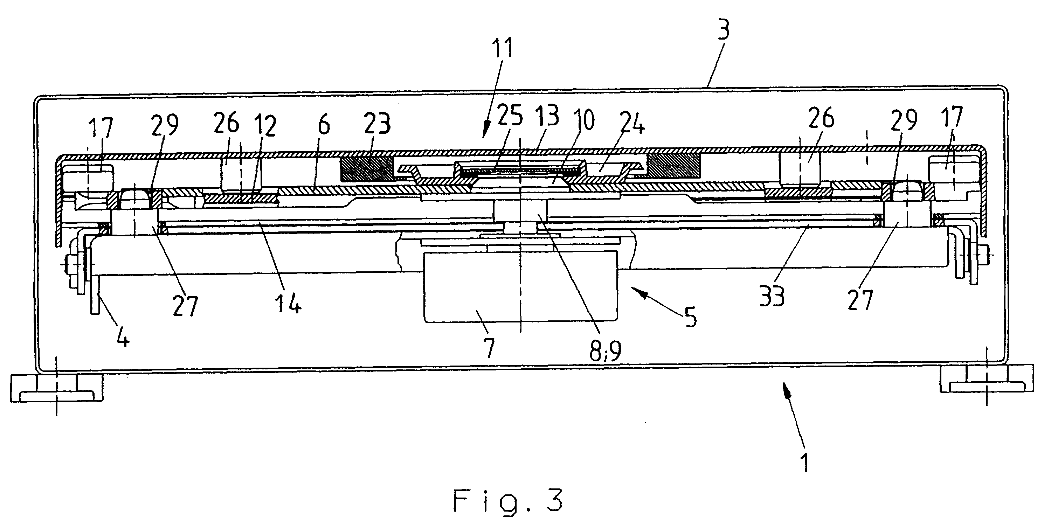

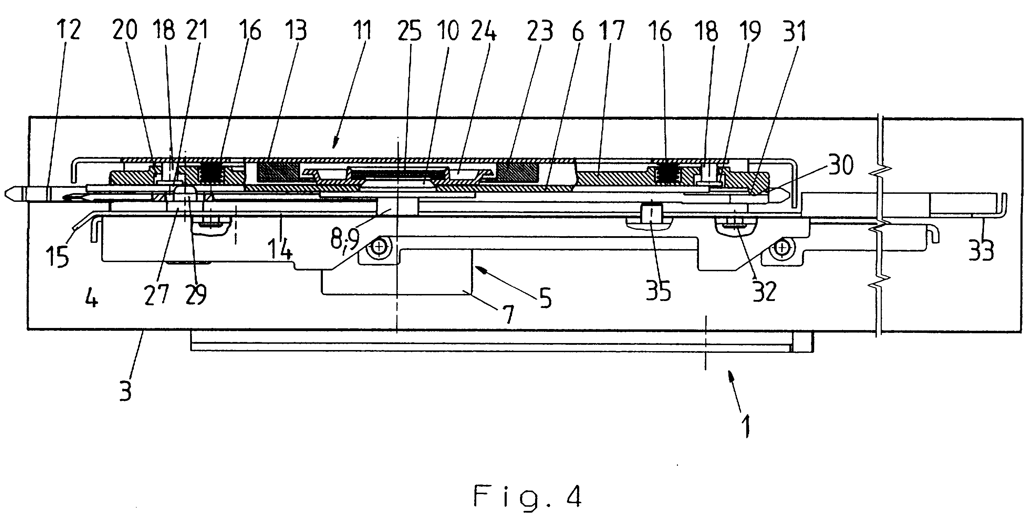

Damit ist das Laufwerk 1 in seine Abspielstellung übergegangen, die in den Fig. 3 und 4 gezeigt ist. Da nun die Platte 6 vom Plattenteller 10 und vom Plattenandrücker 24 festgespannt und leicht vom Plattenhalter 12 abgehoben ist, wird die Abspieleinheit 5 durch den Motor 9 in Rotation versetzt und die Platte 6 abgespielt.

Nach Beendigung des Abspielvorganges wird erneut die Steuereinheit 34 betätigt, die das Einschubfach 11 gegenüber der Abspieleinheit 5 anhebt. Der Plattenandrücker 24 überwindet die Magnetkraft des Plattentellers 10 und liegt wieder lose in seiner Aufnahme 23. Die Niederhalter 26 und die Arretierbolzen 27 gelangen außer Eingriff mit dem Plattenhalter 12, während dich die Platte 6 wieder auf den Plattenhalter 12 legt. Gleichzeitig werden die Führungsleisten 17 durch die Druckfedern 16 entspannt und der Plattenhalter 12 zur Entnahme freigegeben.

## Patentansprüche

1. Laufwerk für Plattenabspiel- und/oder -aufzeichnungsgeräte, aufweisend ein Gehäuse (3) mit einer starr befestigten Abspieleinheit (5) mit einem Plattenteller (10) und mit einem einen Plattenhalter (12) mit einer Platte (6) aufnehmenden, relativ zur Abspieleinheit (5) absenkbaren und anhebbaren Einschubfach (11), in dem ein Plattenandrücker (24) drehbeweglich gelagert ist, wobei ein in der Abspieleinheit (5) gelagerter Magnet (8) beim Absenken des Einschubfaches (11) mit dem Plattenandrücker (24) in Eingriff bringbar ist, dadurch gekennzeichnet, daß das Einschubfach (11) druckfederbelastete Führungsleisten (17) aufweist, die beim Absenken des Einschubfaches (11) gegen den darin aufgenommenen Plattenhalter (12) zusammendrückbar sind und die Platte (6) von diesem freigeben.

2. Laufwerk nach Anspruch 1, dadurch gekennzeichnet, daß der Magnet (8) im Plattenteller (10) der Abspieleinheit (5) angeordnet ist.

3. Laufwerk nach Anspruch 1 oder 2, dadurch gekennzeichnet, daß das Einschubfach (11) im wesentlichen aus einem Führungsdeckel (13) und einem mit diesem starr verbundenen Bodenblech (14) besteht.

4. Laufwerk nach einem der Ansprüche 1 bis 3, dadurch gekennzeichnet, daß das Bodenblech (14) mit einer Öffnung für den Durchtritt des Plattentellers (10) der Abspieleinheit (5) versehen ist.

5. Laufwerk nach einem der Ansprüche 1 bis 4, dadurch gekennzeichnet, daß der Plattenandrücker (24) eine Eisenplatte (25) aufweist und in einer an der Unterseite des Führungsdeckels (13) befestigten Aufnahme (23) mit vertikalem Spiel drehbeweglich gelagert ist.

6. Laufwerk nach einem der Ansprüche 1 bis 5, dadurch gekennzeichnet, daß die druckfederbelasteten Führungsleisten (17) parallel zueinander an den Seitenkanten des Führungsdeckels (13) befestigt sind.

7. Laufwerk nach einem der Ansprüche 1 bis 6, dadurch gekennzeichnet, daß die Führungsleisten (17) an ihren in Einschubrichtung des Plattenhalters (12) hinteren Ende jeweils einen Anschlag (31) aufweisen.

8. Laufwerk nach einem der Ansprüche 1 bis 7, dadurch gekennzeichnet, daß an der Unterseite des Führungsdekkels (13) mehrere zueinander beabstandete Niederhalter (26) für den im Einschubfach (11) aufgenommenen Plattenhalter (12) angeordnet sind.

9. Laufwerk nach einem der Ansprüche 1 bis 8, dadurch gekennzeichnet, daß die Niederhalter (26) eine Höhe aufweisen, die der Höhe der zusammengedrückten Führungsleisten (17) entspricht.

10. Laufwerk nach einem der Ansprüche 1 bis 9, dadurch gekennzeichnet, daß ein die Abspieleinheit (5) aufnehmendes Tragblech (4) mehrere zueinander beabstandete, mit korrespondierenden Öffnungen (29) im Plattenhalter (12) in Eingriff bringbare Arretierbolzen (27) und Auflagebolzen (35) aufweist.

11. Laufwerk nach einem der Ansprüche 1 bis 10, dadurch gekennzeichnet, daß im Gehäuse (3) eine Steuereinheit (34) zum Betätigen des Einschubfaches (11) angeordnet ist.

12. Laufwerk nach einem der Ansprüche 1 bis 11, dadurch gekennzeichnet, daß die Steuereinheit (34) aus einem Antriebsmotor und einem Übersetzungsgetriebe besteht, das mit einer Schaltkulisse zur Bewegungssteuerung des Einschubfaches (11) zusammenwirkt.

## Claims

1. Drive assembly for disc-playing and/or -recording devices, comprising a housing (3) with a rigidly mounted play-back unit (5), with a disc plate (10) and with a slide-in compartment (11), which accommodates a disc holder (12) with one disc (6) and is lowerable and raisable relative to the play-back unit, a disc pressing means (24) being rotatably mounted in said slide-in compartment, and a magnet (8), which is mounted in the play-back unit (5), being engageable with the disc pressing means (24) when the slide-in compartment (11) is lowered, characterised in that the slide-in compartment (11) has guide strips (17), which are loaded by a compression spring and are compressible against the disc holder (12), which is accommodated in the slide-in compartment (11), when said compartment is lowered, and said strips release the disc (6) from said holder.

2. Drive assembly according to claim 1, characterised in that the magnet (8) is disposed in the disc plate (10) of the play-back unit (5).

3. Drive assembly according to claim 1 or 2, characterised in that the slide-in compartment (11) substantially comprises a guide cover (13) and a base plate (14), which is rigidly connected to said cover.

4. Drive assembly according to one of claims 1 to 3, characterised in that the base plate (14) is provided with an aperture for the disc plate (10) of the play-back unit (5) to pass therethrough.

5. Drive assembly according to one of claims 1 to 4, characterised in that the disc pressing means (24) has an iron plate (25) and is rotatably mounted, with vertical clearance, in a receiving means (23), which is secured to the underside of the guide cover (13).

6. Drive assembly according to one of claims 1 to 5, characterised in that the guide strips (17), which are loaded by a compression spring, are secured to the lateral edges of the guide cover (13) parallel to one another.

7. Drive assembly according to one of claims 1 to 6, characterised in that the guide strips (17) each have a stop member (31) at their rear end, when viewed with respect to the slide-in direction of the disc holder (12).

8. Drive assembly according to one of claims 1 to 7, characterised in that a plurality of hold-down means (26), which are spaced apart from one another, for holding-down the disc holder (12) accommodated in the slide-in compartment (11) are disposed on the underside of the guide cover (13).

9. Drive assembly according to one of claims 1 to 8, characterised in that the hold-down means (26) have a height which corresponds to the height of the compressed guide strips (17).

10. Drive assembly according to one of claims 1 to 9, characterised in that a supporting plate (4), which accommodates the play-back unit (5), has a plurality of locking bolts (27) and bearing bolts (35), which are spaced apart from one another and are engageable with corresponding openings (29) in the disc holder (12).

11. Drive assembly according to one of claims 1 to 10, characterised in that a control unit (34) for actuating the slide-in compartment (11) is disposed in the housing (3).

12. Drive assembly according to one of claims 1 to 11, characterised in that the control unit (34) comprises a drive motor and a transmission gear, which cooperates with a control slide for controlling the movement of the slide-in compartment (11).

## Revendications

1. Dispositif d'entraînement pour appareils de lecture et/ou d'enregistrement de disques, comportant un bâti (3) avec une unité de lecture (5) fixée rigidement, avec un plateau de disque (10) et avec un tiroir (11) recevant un porte-disque (12) avec un disque (6), qui peut être abaissé et relevé par rapport à l'unité de lecture (5), dans lequel un presse-disque (24) est monté mobile à rotation, un aimant (8), monté dans l'unité de lecture (5), pouvant être amené en prise avec le presse-disque (24) lorsque le tiroir (11) est abaissé, caractérisé en ce que le tiroir (11) présente des baguettes de guidage (17) sollicitées par un ressort de pression et qui, lorsque le tiroir (11) est abaissé, peuvent être comprimées contre le porte-disque (12) logé à l'intérieur et libèrent le disque (6) de ce porte-disque.

2. Dispositif d'entraînement selon la revendication 1, caractérisé en ce que l'aimant (8) est disposé dans le plateau de disque (10) de l'unité de lecture (5).

3. Dispositif d'entraînement selon la revendication 1 ou 2, caractérisé en ce que le tiroir (11) est essentiellement constitué d'un couvercle de guidage (13) et d'une tôle de fond (14) reliée rigidement à celui-ci.

4. Dispositif d'entraînement selon l'une des revendications 1 à 3, caractérisé en ce que la tôle de fond (14) est pourvue d'une ouverture pour le passage du plateau de disque (10) de l'unité de lecture (5).

5. Dispositif d'entraînement selon l'une des revendications 1 à 4, caractérisé en ce que le presse-disque (24) présente une plaque en fer (25) et est monté mobile à rotation, avec jeu vertical, dans un logement (23) fixé à la face inférieure du couvercle de guidage (13).

6. Dispositif d'entraînement selon l'une des revendications 1 à 5, caractérisé en ce que les baguettes de guidage (17) sollicitées par un ressort de pression sont fixées parallèlement entre elles aux bords latéraux du couvercle de guidage (13).

7. Dispositif d'entraînement selon l'une des revendications 1 à 6, caractérisé en ce que les baguettes de guidage (17) présentent chacune une butée (31) à leur extrémité arrière dans le sens d'introduction du porte-disque (12).

8. Dispositif d'entraînement selon l'une des revendications 1 à 7, caractérisé en ce que sur la face inférieure du couvercle de guidage (13) sont disposés plusieurs organes presseurs (26), espacés les uns des autres, pour le porte-disque (12) logé dans le tiroir (11).

9. Dispositif d'entraînement selon l'une des revendications 1 à 8, caractérisé en ce que les organes presseurs (26) ont une hauteur qui correspond à la hauteur des baguettes de guidage (17) comprimées.

10. Dispositif d'entraînement selon l'une des revendications 1 à 9, caractérisé en ce qu'une tôle de support (4), recevant l'unité de lecture (5), présente plusieurs taquets d'arrêt (27) et plots de support (35) espacés les uns des autres, qui peuvent être amenés en prise avec des ouvertures (29) correspondantes dans le porte-disque (12).

11. Dispositif d'entraînement selon l'une des revendications 1 à 10, caractérisé en ce que dans le bâti (3) est disposée une unité de commande (34) pour l'actionnement du tiroir (11).

12. Dispositif d'entraînement selon l'une des revendications 1 à 11, caractérisé en ce que l'unité de commande (34) est constituée d'un moteur d'entraînement et d'une transmission à engrenages qui coopère avec une coulisse de manoeuvre pour la commande de mouvement du tiroir (11) .
